# EUROPEAN PATENT SPECIFICATION

(11) **EP 3 232 266 B1**
(45) Date of publication and mention of the grant of the patent: **18.08.2021**
(21) Application number: 15868056.1
(22) Date of filing: 15.05.2015
(51) Int. Cl.: G03B 17/56, G03B 15/00, G03B 15/02, G03B 15/05, H04N 5/225, H04N 5/238

(54) **IMAGING UNIT AND IMAGING SYSTEM**
BILDGEBUNGSEINHEIT UND BILDGEBUNGSSYSTEM
UNITÉ POUR IMAGERIE, ET SYSTÈME D'IMAGERIE

(30) Priority: 10.12.2014 JP 2014250153
(43) Date of publication of application: 18.10.2017
(73) Proprietor: FUJIFILM Business Innovation Corp., Minato-ku Tokyo (JP)
(72) Inventor: ENDO Keiji, Yokohama-shi Kanagawa 220-8678 (JP); MASUDA Tadashi, Minamiashigara-shi Kanagawa 250-0111 (JP)
(74) Representative: Haseltine Lake Kempner LLP
(86) International application number: PCT/JP2015/064085
(87) International publication number: WO 2016/092880

(56) References cited:
- EP-A1- 2 500 758
- EP-A1- 2 881 788
- WO-A1-2013/190985
- WO-A1-2014/021449
- FR-A1- 2 821 152
- JP-A- 2007 208 715
- JP-A- 2009 219 019

## Description

### Technical Field

The present invention relates to an imaging unit and an imaging system.

### Background Art

An image processing device is known that detects a pattern (for example, paper fingerprint information) which appears on a surface of a medium and verifies originality of the medium using pattern information.

In addition, WO 2014/021449 and JP-A-2004-279733 disclose a magnification imaging unit that captures a magnified image using illumination light with a camera of a camera-equipped mobile phone. EP2500758 discloses an accessory attachable to a mobile phone wherein a light pipe is used to supply illumination light from the lighting section of the mobile phone to the subject.

### Summary of Invention

### Technical Problem

At least one object of an exemplary embodiment of the present invention, compared to a case where an optical axis of light from a lighting section of a mobile terminal is parallel to an optical axis of an optical system acquired by an imaging section of the mobile terminal, is to provide an imaging unit that is capable of accurately acquiring pattern information of an imaging target and an imaging system that includes the mobile terminal having the imaging section and the lighting section and the imaging unit.

### Solution to Problem

To solve the aforementioned problem, there is provided an imaging unit according to the appended claims comprising:
an attachment member that is attached to a mobile terminal which includes an imaging section and a lighting section; an optical member that supplies illumination light from the lighting section to a part to be imaged of an imaging target which is imaged by the imaging section in an oblique direction; and a shading member that encloses a periphery of the optical member, wherein a first optical axis of light from the optical member enters the imaging target in a direction oblique to a second optical axis of an optical system of the imaging wherein the optical member includes
a first member that delivers illumination light from the lighting section in a direction away from the imaging section, and a second member that is disposed inside the shading member and reflects the light delivered by the first member toward the part to be imaged of the imaging target.

Further aspects of this imaging unit are defined in the dependent claims.

### Brief Description of Drawings

[Fig. 1] Fig. 1 is a perspective view schematically illustrating an imaging system according to a first exemplary embodiment.
[Fig. 2] Fig. 2 is a view illustrating an outline of an imaging unit according to the first exemplary embodiment.
[Fig. 3] Fig. 3 is a view illustrating modification example 1 of the imaging unit according to the first exemplary embodiment.
[Fig. 4A] Fig. 4A is a view illustrating a section of the imaging unit according to the first exemplary embodiment.
[Fig. 4B] Fig. 4B is a view illustrating modification example 2 of the imaging unit according to the first exemplary embodiment.

### Description of Embodiments

Hereinafter, an imaging system and an imaging unit according to each exemplary embodiment of the present invention will be described with the accompanying drawings.

### [First Exemplary Embodiment]

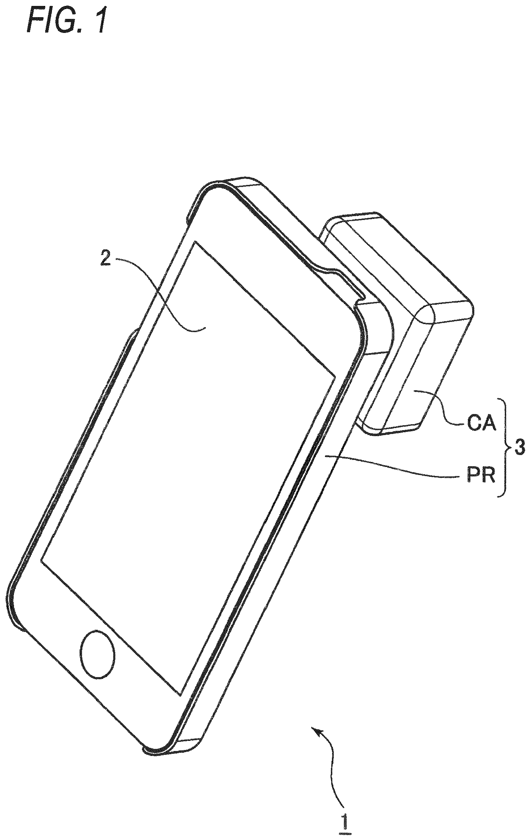

Fig. 1 is a perspective view schematically illustrating an imaging system according to a first exemplary embodiment. In an imaging system 1 according to the first exemplary embodiment, an imaging unit 3 is attached to a portable mobile terminal 2 that includes an imaging section (camera function) and a lighting section (flash function). In addition, the imaging unit 3 includes an attachment member PR that is fitted and fixed to an external shape of the mobile terminal 2, and a case CA of closing-up imaging.

Although the mobile terminal 2 according to the exemplary embodiment is implemented by a mobile phone, such as a smart phone, the mobile terminal 2 may be realized by a tablet terminal, which includes an imaging section and a lighting section. In addition, the mobile terminal 2 includes a display and a touch panel in addition to a microprocessor, a storage section which is formed by a storage medium, such as a RAM or a hard disk drive, a communication interface, and an operation button, and includes an imaging section and a lighting section on a rear surface of the display.

Meanwhile, the attachment member PR is formed with an opening in a location of the imaging section of the mobile terminal 2, and pattern information is acquired from the imaging section through the opening and a lens section LZ that is disposed inside a shading member SL. In addition, similarly, the attachment member PR is formed with an opening in a location of the lighting section of the mobile terminal 2, and illumination light is supplied to optical members OP, which are disposed inside the shading member SL, through the opening.

The imaging section of the mobile terminal 2 includes imaging elements, such as a charge coupled device (CCD) image sensor and a complementary metal oxide semiconductor (CMOS) image sensor, and an optical system such as a lens, and acquires image data by imaging an image of a subject. In addition, an optical axis (second optical axis) of the optical system in the imaging section is in a direction that is approximately perpendicular to the rear surface of the mobile terminal 2.

The lighting section of the mobile terminal 2 includes, for example, a light emitting diode (LED) as a light emitting element. The lighting section according to the exemplary embodiment emits light in a case where an image is acquired by the imaging section.

In addition, in the imaging system 1 according to the exemplary embodiment, an application program for acquiring pattern information is installed in the mobile terminal 2. In a case where the application program is driven, light emitting is maintained by the lighting section and imaging is started by the imaging section, and such a state is displayed on the display. Furthermore, input is performed on the operation button and the touch panel of the mobile terminal 2, an image of an imaging target that is lighted by the lighting section is acquired, and, furthermore, the pattern information is acquired.

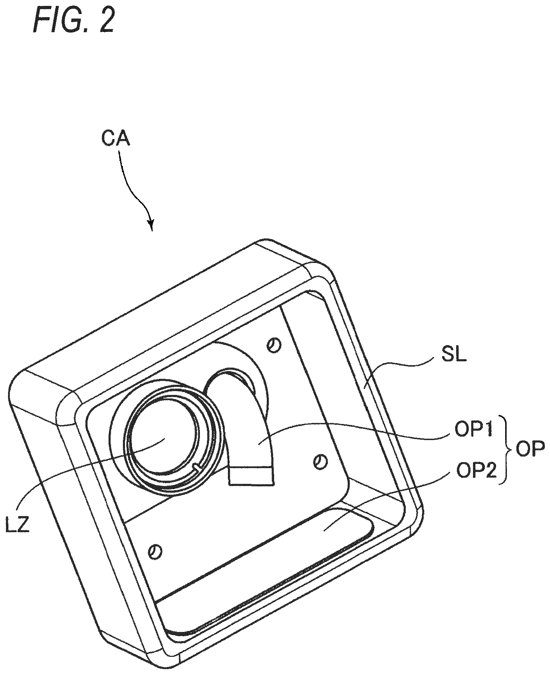

Here, specifically, Fig. 2 is a view illustrating an inside of the case CA of closing-up imaging of the imaging unit 3 according to the exemplary embodiment. The case CA of closing-up imaging of the imaging unit 3 is fixed to the attachment member PR in the locations of the imaging section and the lighting section of the mobile terminal 2, and includes the lens section LZ, the optical members OP, and the box-shaped shading member SL.

The lens section LZ includes a close-up lens (macro lens) that reduces the shortest imaging distance of the imaging section of the mobile terminal 2, and a cylindrical member that holds the close-up lens. The lens section LZ is disposed in a location corresponding to the imaging section of the mobile terminal 2, and is fixed in the case CA of closing-up imaging such that an optical axis of the close-up lens matches the optical axis of the optical system of the imaging section of the mobile terminal 2.

The optical members OP include a first member OP1 that delivers illumination light from the lighting section in a direction away from the lens section LZ, and a second member OP2 that reflects illumination light delivered by the first member OP1 and irradiates a part to be imaged (an area which is imaged by the imaging section of the mobile terminal 2 and is taken in as an image) of an imaging target (an object such as paper, plastic, a tablet, and a metal component) that is a target, from which the pattern information is acquired, in an oblique direction.

The first member OP1 according to the exemplary embodiment includes a light-guiding member that guides light so as to change a direction in which illumination light from the lighting section progresses. An incident surface of the light-guiding member is disposed to face the lighting section of the mobile terminal 2. Therefore, the light-guiding member effectively takes in illumination light from the lighting section. Illumination light from the lighting section is propagated by repeating full reflection and refraction inside the light-guiding member, and illumination light is emitted obliquely downward such that a progress direction is gradually changed and becomes a direction away from the lens section LZ. Meanwhile, it is preferable that the first member OP1 is a light-guiding member which has a tube shape (a cylindrical shape, a polygonal shape, or the like).

The second member OP2 includes a reflection member that is disposed along a wall surface of the shading member SL which will be described later. Illumination light from the first member OP1 is reflected by the second member OP2 that is disposed on a side of the lens section LZ and is incident from a direction oblique to the imaging target which is located downward the lens section LZ.

Specifically, a principal ray progresses in a direction, to which a central axis (optical axis) of the first member OP1 that is a cylindrical light-guiding member faces, and a principal ray which is reflected by the second member OP2 is incident obliquely against the imaging target which is disposed below the lens section LZ. The principal ray refers to a ray which passes through a center of light flux of illumination light which is supplied from the optical members OP to the imaging target on which the close-up imaging is performed. In the exemplary embodiment, the principal ray refers to a ray that passes through the central axis of the first member OP1 and progresses after being reflected by the second member OP2, and light which progresses on the optical axis (first optical axis) of the optical members OP. In addition, a medium, which is used as an example of the imaging target on which the close-up imaging is performed, is disposed to be approximately parallel to the rear surface of the mobile terminal 2 (disposed to be perpendicular to the second optical axis of the optical system acquired by the imaging section of the mobile terminal 2 and the lens section LZ), and the principal ray from the optical members OP (the first optical axis of light from the optical members) is incident into the medium, for example, at an angle, which is equal to or larger than 10° and which is equal to or smaller than 80°, or an angle, which is equal to or larger than 20° and which is equal to or smaller than 70°, based on a second optical axial direction which is perpendicular to the medium. Meanwhile, the first optical axis of light from the optical members OP may be incident to cross the second optical axis of the optical system acquired by the imaging section of the mobile terminal 2 and the lens section LZ, or may be incident into the part to be imaged and a periphery thereof.

The shading member SL is formed to have a box-shaped structure so as to involve the lens section LZ and the optical members OP (the first member OP1 and the second member OP2), and blocks external light which reaches the close-up part. In addition, a rectangular end surface of the shading member SL is formed to be a parallel surface against the rear surface of the mobile terminal 2, and it is easy to locate the medium in a focal depth of the optical system, in which the shortest imaging distance is reduced, due to the end surface.

The pattern information which includes the paper fingerprint is formed by random undulation due to paper fiber or the like, and, in a case where illumination light is irradiated from the oblique direction while the external light is being blocked, it is easy to acquire the pattern information attributable to the undulation with reproducibility. The originality may be confirmed by supplying pattern information of an original medium to the mobile terminal 2 through a network as pattern information which is newly acquired in the imaging system 1.

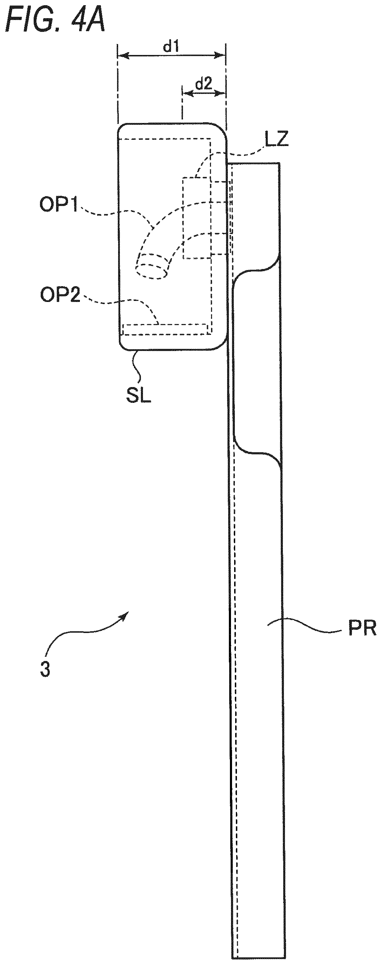

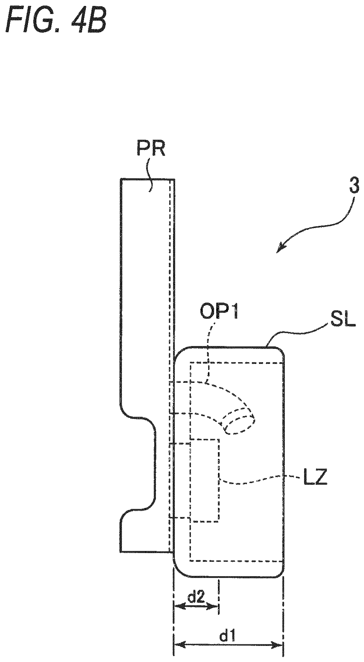

In addition, a thickness (see d1 in Figs. 4A and 4B) of the shading member SL of the imaging unit 3 according to the exemplary embodiment is a size corresponding to the optical system in which the shortest imaging distance is reduced by the lens section LZ. In a case where a thickness (see d2 in Figs. 4A and 4B) of the lens section LZ is taken into consideration, a space, in which it is possible to supply illumination light from the lighting section of the mobile terminal 2 to the close-up part, is narrow. However, the optical members OP, which induce illumination light of the mobile terminal 2, include the first member OP1 that guides the principal ray of illumination light such that the principal ray faces the direction away from the lens section LZ, and the second member OP2 that causes the principal ray from the first member OP1 to be reflected and to face the close-up part (the part to be imaged acquired in a case where the imaging target is closed up by the lens section LZ), and thus a space inside the shading member SL is effectively utilized, and it is easy to uniformly supply illumination light to the close-up part in an oblique direction from a narrow space between the lens section LZ and the medium.

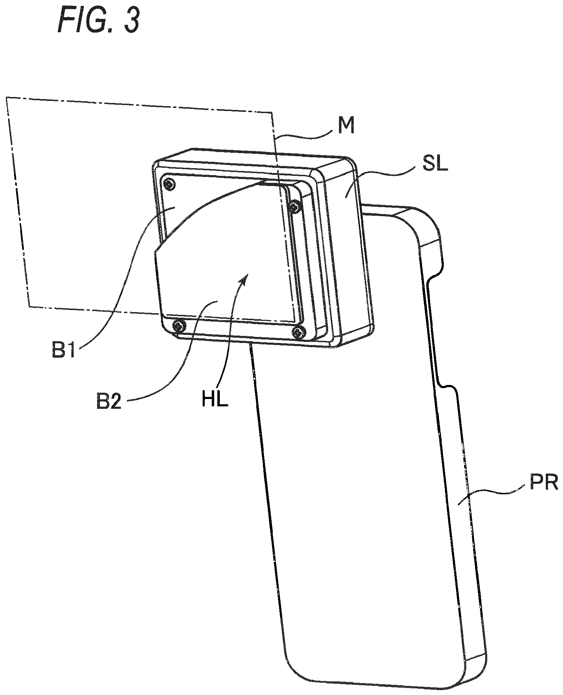

Fig. 3 is a view schematically illustrating modification example 1 of the imaging system 1 according to the exemplary embodiment. As being illustrated in the drawing, the imaging system 1 according to modification example 1 includes a holding member HL that holds a medium M in a location which is separated from the imaging section of the mobile terminal 2. Specifically, the holding member HL is located below the shading member SL. The holding member HL is connected to a lower end of the shading member SL, and includes two plate-shaped members B1 and B2 which are parallel to the rear surface of the mobile terminal 2. The two plate-shaped members B1 and B2 are connected by an L-shaped inner wall.

Therefore, the medium M, which is closed up, is held by being interposed between the two plate-shaped members B1 and B2, with the result that variation in the optical axial direction of the optical system due to the imaging section of the mobile terminal 2 and the lens section LZ is limited, and variation in a vertical direction and a horizontal direction is limited by the L-shaped inner wall. Therefore, it is easy to locate the medium M, which is closed up, by the holding member HL.

Subsequently, Fig. 4A is a view illustrating a section of a case CA of closing-up imaging according to the exemplary embodiment, and Fig. 4B is a view illustrating a section of a case CA of closing-up imaging according to modification example 2 of the exemplary embodiment.

As being illustrated in Fig. 4A, the first member OP1 of the case CA of closing-up imaging according to the exemplary embodiment is configured to guide illumination light toward the second member OP2 which is disposed in a location separated from the lens section LZ, and to cause illumination light to reach the close-up part through reflection in the second member OP2. As being illustrated in Fig. 4A, in a case where the principal ray from the first member OP1 reaches the medium through the second member OP2, the principal ray is incident into the medium at an angle which is equal to or smaller than 45° or at a low angle which is equal to or smaller than 30°. In contrast, in modification example 2 of the exemplary embodiment, the optical members OP that supply illumination light to the close-up part do not include the second member OP2 which is the reflection member, and include only the first member OP1 which includes the light-guiding member.

As being illustrated in Fig. 4B, the first member OP1 according to modification example 2 is formed such that a light emission surface exists on a side which is closer to the medium than an end of the lens section LZ on a side of the medium. Specifically, an upper end of the light emission surface of the first member OP1 becomes a side which is closer to the medium than the end of the lens section LZ. In addition, in modification example 2, the lens section LZ does not exist on the extended line of the cylindrical first member OP1. Specifically, in a space of the same radius centering on an optical path of the principal ray from the first member OP1 (light emitted from the central axis of the first member OP1), the lens section LZ does not exist, and the close-up part is directly irradiated with illumination light from the light emission surface of the first member OP1. There are many cases where the imaging section and the lighting section of the mobile terminal 2 are disposed to be close to each other. Therefore, in a case where the first member OP1 does not exist, illumination light which faces the close-up part by the lens section LZ is not blocked. However, in a case where the first member OP1 exists and light is guided such that illumination light is emitted to the side of the medium rather than the end of the lens section LZ, it is easy to supply illumination light acquired by the lighting section of the mobile terminal 2 to the close-up part without delay.

Meanwhile, in a case of the exemplary embodiment illustrated in Fig. 4A, the light emission surface of the first member OP1 may not be necessarily provided on the side of the medium rather than the end of the lens section LZ on the side of the medium. For example, a part of the light emission surface of the first member OP1 may be provided on a side of the mobile terminal 2 rather than the end of the lens section LZ on the side of the medium.

Meanwhile, in the exemplary embodiment and the modification examples, a location of the case CA of closing-up imaging and locations of the lens section LZ and the optical members OP may be fixed and may be changed according to locations of the imaging section and the lighting section of the mobile terminal 2. In addition, the shape and the direction of the first member OP1 may be fixed and may be changed. In addition, in order to improve reproducibility in a case where the pattern information is acquired, it is desired that the location and the shape are fixed.

Meanwhile, in the exemplary embodiment and the modification examples, close-up imaging is performed on the imaging target by the lens section LZ. However, in the present invention, the lens section LZ may not be necessarily included and the part to be imaged may be irradiated with the principal ray from the optical members OP in an oblique direction. In addition, in the exemplary embodiment and the modification examples, the optical members OP include the first member OP1 (light-guiding member).

### Industrial Applicability

It is useful to use at least one exemplary embodiment of the present invention to image a pattern of an imaging target, such as paper or plastic, by, for example, the mobile terminal such as a smart phone.

### Reference Signs List

1 imaging system
2 mobile terminal
3 imaging unit
PR attachment member
CA case of closing-up imaging
LZ lens section
OP optical members
OP1 first member
OP2 second member
SL shading member
HL holding member

## Claims

1. An imaging unit (3) comprising:
an attachment member (PR) that is attached to a mobile terminal (2) which includes an imaging section and a lighting section;
an optical member (OP) that supplies illumination light from the lighting section to a part to be imaged of an imaging target which is imaged by the imaging section in an oblique direction; and
a shading member (SL) that encloses a periphery of the optical member,
wherein a first optical axis of light from the optical member enters the imaging target in a direction oblique to a second optical axis of an optical system of the imaging section; and
**characterised in that**
the optical member (OP) includes
a first member (OP1) that delivers illumination light from the lighting section in a direction away from the imaging section, and
a second member (OP2) that is disposed inside the shading member (SL), and reflects the light delivered by the first member toward the part to be imaged of the imaging target.

2. The imaging unit (3) according to Claim 1, wherein
the first member (OP1) guides the illumination light from the lighting section to a location closer to the imaging target than an end of the imaging section at a side of the imaging target, and emits illumination light in the oblique direction toward the part to be imaged of the imaging target at the location closer to the imaging target than the end of the imaging section at the side of the imaging target.

3. The imaging unit (3) according to Claim 1 or 2, further comprising:
a lens section (LZ) that is fixed at a location of the imaging section of the mobile terminal (2) and closes up the imaging target,
wherein the shading member (SL) encloses a periphery of the lens section and the optical member and blocks external light at a close-up part of the imaging target, and
wherein the first optical axis of light from the optical member enters the imaging target in the direction oblique to the second optical axis of the optical system of the imaging section and the lens section.

4. The imaging unit (3) according to Claim 3, wherein
the first member (OP1) delivers illumination light from the lighting section in a direction away from the lens section (LZ), and
the second member (OP2) that is disposed inside the shading member (SL) reflects the illumination light delivered by the first member toward the close-up part of the imaging target.

5. The imaging unit (3) according to Claim 3, wherein
the first member (OP1) delivers the illumination light from the lighting section to the close-up part of the imaging target, and
the first member (OP1) guides the illumination light from the lighting section to a location closer to the imaging target than an end of the lens section (LZ) at a side of the imaging target, and emits illumination light in the oblique direction toward the close-up part of the imaging target at the location closer to the imaging target than the end of the lens section at the side of the imaging target.

6. The imaging unit (3) according to any preceding Claim, wherein the second optical axis and a direction perpendicular to a surface of the second member (OP2) are orthogonal to each other.

7. The imaging unit (3) according to any one of Claims 1 to 6, further comprising:
a holding member (HL) that holds the imaging target in a position separated from the imaging section.

8. An imaging system (1) comprising:
a mobile terminal (2) that comprises an imaging section and a lighting section; and
an imaging unit (3) according to claim 1, which is attached to the mobile terminal.

9. An imaging system (1) comprising:
a mobile terminal (2) that comprises an imaging section and a lighting section; and
an imaging unit (3) according to claim 3, which is attached to the mobile terminal.

## Patentansprüche

1. Bildgebungseinheit (3), umfassend:
ein Anbringungselement (PR), das an einem mobilen Endgerät (2) angebracht ist und das eine Bildgebungssektion und eine Beleuchtungssektion aufweist;
ein optisches Element (OP), das Beleuchtungslicht von der Beleuchtungssektion zu einem abzubildenden Teil eines Bildgebungsziels bereitstellt, das von der Bildgebungssektion in einer schrägen Richtung abgebildet wird; und
ein Abschattungselement (SL), das einen Umfang des optischen Elements umschließt,
wobei eine erste optische Lichtachse von dem optischen Element in einer Richtung schräg zu einer zweiten optischen Achse eines optischen Systems der Bildgebungssektion in das Bildgebungsziel eintritt; und
**dadurch gekennzeichnet, dass**
das optische Element (OP) aufweist
ein erstes Element (OP1), das Beleuchtungslicht von der Beleuchtungssektion in einer Richtung weg von der Bildgebungssektion liefert, und
ein zweites Element (OP2), das innerhalb des Abschattungselements (SL) angeordnet ist und das von dem ersten Element gelieferte Licht zu dem abzubildenden Teil des Bildgebungsziel hin reflektiert.

2. Bildgebungseinheit (3) nach Anspruch 1, wobei
das erste Element (OP1) das Beleuchtungslicht von der Beleuchtungssektion zu einem Ort leitet, der näher an dem Bildgebungsziel liegt als ein Ende der Bildgebungssektion an einer Seite des Bildgebungsziels, und Beleuchtungslicht in der schrägen Richtung hin zu dem abzubildenden Teil des Bildgebungsziels zu dem Ort emittiert, der näher an dem Bildgebungsziel liegt als der Ende der Bildgebungssektion an der Seite des Bildgebungsziels.

3. Bildgebungseinheit (3) nach Anspruch 1 oder 2, ferner umfassend:
einen Linsensektion (LZ), die an einem Ort der Bildgebungssektion des mobilen Endgeräts (2) angebracht ist und eine Nahaufnahme des Bildgebungsziel aufnimmt,
wobei das Abschattungselement (SL) einen Umfang der Linsensektion und des optischen Elements umschließt und externes Licht an einem Nahaufnahmeteil des Bildgebungsziels blockiert, und
wobei die erste optische Lichtachse von dem optischen Element in der Richtung schräg zu der zweiten optischen Achse des optischen Systems der Bildgebungssektion und der Linsensektion in das Bildgebungsziel eintritt.

4. Bildgebungseinheit (3) nach Anspruch 3, wobei das erste Element (OP1) Beleuchtungslicht von der Beleuchtungssektion in einer Richtung weg von der Linsensektion (LZ) liefert, und
das zweite Element (OP2), das innerhalb des Abschattungselements (SL) angeordnet ist, das von dem ersten Element gelieferte Beleuchtungslicht zu dem Nahaufnahmeteil des Bildgebungsziels hin reflektiert.

5. Bildgebungseinheit (3) nach Anspruch 3, wobei
das erste Element (OP1) das Beleuchtungslicht von der Beleuchtungssektion zu dem Nahaufnahmeteil des Bildgebungsziels liefert,
das erste Element (OP1) das Beleuchtungslicht von der Beleuchtungssektion zu einem Ort führt, der näher an dem Bildgebungsziel liegt als ein Ende der Linsensektion (LZ) an einer Seite des Bildgebungsziels, und Beleuchtungslicht in der schrägen Richtung hin zu dem Nahaufnahmeteil des Bildgebungsziels zu dem Ort emittiert, die näher an dem Bildgebungsziel liegt als das Ende der Linsensektion an der Seite des Bildgebungsziels.

6. Bildgebungseinheit (3) nach einem vorhergehenden Anspruch, wobei die zweite optische Achse und eine Richtung senkrecht zu einer Fläche des zweiten Elements (OP2) orthogonal zueinander sind.

7. Bildgebungseinheit (3) nach einem der Ansprüche 1 bis 6, ferner umfassend:
ein Halteelement (HL), das das Bildgebungsziel in einer von der Bildgebungssektion getrennten Position hält.

8. Bildgebungssystem (1), umfassend:
ein mobiles Endgerät (2), das eine Bildgebungssektion und eine Beleuchtungssektion umfasst; und
eine Bildgebungseinheit (3) nach Anspruch 1, die an dem mobilen Endgerät angebracht ist.

9. Bildgebungssystem (1), umfassend:
ein mobiles Endgerät (2), das eine Bildgebungssektion und eine Beleuchtungssektion umfasst; und
eine Bildgebungseinheit (3) nach Anspruch 3, die an dem mobilen Endgerät angebracht ist.

## Revendications

1. Unité d'imagerie (3) comprenant :
un élément de fixation (PR) qui est fixé à un terminal mobile (2) qui comprend une section d'imagerie et une section d'éclairage ;
un élément optique (OP) qui fournit une lumière d'éclairage provenant de la section d'éclairage à une partie à imager d'une cible d'imagerie qui est imagée par la section d'imagerie dans une direction oblique ; et
un élément d'ombrage (SL) qui entoure une périphérie de l'élément optique,
dans laquelle un premier axe optique de lumière à partir de l'élément optique pénètre dans la cible d'imagerie dans une direction oblique par rapport à un second axe optique d'un système optique de la section d'imagerie ; et
**caractérisée en ce que**
l'élément optique (OP) comprend
un premier élément (OP1) qui délivre une lumière d'éclairage provenant de la section d'éclairage dans une direction à l'écart de la section d'imagerie, et
un second élément (OP2) qui est disposé à l'intérieur de l'élément d'ombrage (SL), et réfléchit la lumière délivrée par le premier élément vers la partie à imager de la cible d'imagerie.

2. Unité d'imagerie (3) selon la revendication 1, dans laquelle
le premier élément (OP1) guide la lumière d'éclairage provenant de la section d'éclairage vers un emplacement plus proche de la cible d'imagerie qu'une extrémité de la section d'imagerie au niveau d'un côté de la cible d'imagerie, et émet une lumière d'éclairage dans la direction oblique vers la partie à imager de la cible d'imagerie au niveau de l'emplacement plus proche de la cible d'imagerie que l'extrémité de la section d'imagerie au niveau du côté de la cible d'imagerie.

3. Unité d'imagerie (3) selon la revendication 1 ou 2, comprenant en outre :
une section de lentille (LZ) qui est fixée au niveau d'un emplacement de la section d'imagerie du terminal mobile (2) et ait un gros plan la cible d'imagerie,
dans laquelle l'élément d'ombrage (SL) entoure une périphérie de la section de lentille et de l'élément optique et bloque la lumière externe au niveau d'une partie de gros plan de la cible d'imagerie, et
dans laquelle le premier axe optique de lumière à partir de l'élément optique pénètre dans la cible d'imagerie dans la direction oblique par rapport au second axe optique du système optique de la section d'imagerie et de la section de lentille.

4. Unité d'imagerie (3) selon la revendication 3, dans laquelle
le premier élément (OP1) délivre une lumière d'éclairage provenant de la section d'éclairage dans une direction à l'écart de la section de lentille (12), et
le second élément (OP2) qui est disposé à l'intérieur de l'élément d'ombrage (SL) réfléchit la lumière d'éclairage délivrée par le premier élément vers la partie de gros plan de la cible d'imagerie.

5. Unité d'imagerie (3) selon la revendication 3, dans laquelle
le premier élément (OP1) délivre la lumière d'éclairage provenant de la section d'éclairage à la partie de gros plan de la cible d'imagerie, et
le premier élément (OP1) guide la lumière d'éclairage provenant de la section d'éclairage vers un emplacement plus proche de la cible d'imagerie qu'une extrémité de la section de lentille (LZ) au niveau d'un côté de la cible d'imagerie, et émet une lumière d'éclairage dans la direction oblique vers la partie de gros plan de la cible d'imagerie au niveau de l'emplacement plus proche de la cible d'imagerie que l'extrémité de la section de lentille au niveau du côté de la cible d'imagerie.

6. Unité d'imagerie (3) selon l'une quelconque des revendications précédentes, dans laquelle le second axe optique et une direction perpendiculaire à une surface du second élément (OP2) sont orthogonaux l'un par rapport à l'autre.

7. Unité d'imagerie (3) selon l'une quelconque des revendications 1 à 6, comprenant en outre : un élément de maintien (HL) qui maintient la cible d'imagerie dans une position séparée de la section d'imagerie.

8. Système d'imagerie (1) comprenant :
un terminal mobile (2) qui comprend une section d'imagerie et une section d'éclairage ; et
une unité d'imagerie (3) selon la revendication 1, qui est fixée au terminal mobile.

9. Système d'imagerie (1) comprenant :
un terminal mobile (2) qui comprend une section d'imagerie et une section d'éclairage ; et
une unité d'imagerie (3) selon la revendication 3, qui est fixée au terminal mobile.
